Europäisches Patentamt

European Patent Office

Office européen des brevets

(11) Veröffentlichungsnummer: **0 103 152**
A2

(12) **EUROPÄISCHE PATENTANMELDUNG**

(21) Anmeldenummer: 83107756.5

(22) Anmeldetag: 06.08.83

(51) Int. Cl.³: **G 01 G 3/142, G 01 G 3/147**

(30) Priorität: 19.08.82 DE 3230770

(43) Veröffentlichungstag der Anmeldung: 21.03.84
Patentblatt 84/12

(84) Benannte Vertragsstaaten: AT CH FR GB IT LI NL SE

(71) Anmelder: Industrie-Automation Wäge- und Prozesstechnik GmbH & Co., Hans-Bunte-Strasse 8-10 Postfach 103009, D-6900 Heidelberg (DE)

(72) Erfinder: Weber, Jörg, Waldstrasse 12, D-6901 Wiesenbach (DE)
Erfinder: Hoffmann, Erich, Hardwaldring 50, D-6836 Oftersheim (DE)

(74) Vertreter: Patentanwälte Kohler - Schwindling - Späth, Hohentwielstrasse 41, D-7000 Stuttgart 1 (DE)

(54) Elektromechanische Waage und Auswerteeinrichtung hierfür.

(57) Eine elektromechanische Waage mit einem Lastträger zur Aufnahme der zu wägenden Last, mindestens einer Wägezelle, die in Abhängigkeit von der Last eine für die Last charakteristische Meßspannung abgibt, mit einer mindestens einen Operationsverstärker enthaltenden Einrichtung zur Auswertung der Meßspannung mit einer Einrichtung zum mindestens teilweisen Kompensieren des Gewichts des unbelasteten Lastträgers, die eine Spannungsteileranordnung mit digital einstellbarem Teilungsfaktor aufweist, an deren Eingang eine Referenzspannung anliegt, wobei das Ausgangssignal der Spannungsteileranordnung einer Subtraktionseinrichtung (24, 26) zugeführt wird, der auch die Meßspannung oder eine von dieser abgeleitete Spannung zugeführt wird, ist dadurch gekennzeichnet, daß die Spannungsteileranordnung (38, 40) einen durch digitale elektrische Signale steuerbaren integrierten multiplizierenden Digital-Analog-Wandler (38) aufweist. Dadurch ist auf einfache Weise ein definierter Abgleich möglich.

Anmelder:                               Stuttgart, den 21. Juli 1983
industrie automation                    P 4136 EP R/Rh
Wäge- und Prozesstechnik
GmbH + Co
Hans-Bunte-Straße 8 - 10
6900 Heidelberg 1


Vertreter:
Patentanwälte
Kohler-Schwindling-Späth
Hohentwielstraße 41
7000 Stuttgart 1


## Elektromechanische Waage und Auswerteeinrichtung hierfür


Die Erfindung betrifft zunächst eine elektromechanische
Waage mit einem Lastträger zur Aufnahme der zu wägenden
Last, mindestens einer Wägezelle, die in Abhängigkeit von
der Last eine für die Last charakteristische Meßspannung
abgibt, mit einer mindestens einen Operationsverstärker
enthaltenden Einrichtung zur Auswertung der Meßspannung mit
einer Einrichtung zum mindestens teilweisen Kompensieren des
Gewicht des unbelastenden Lastträgers, die eine Spannungsteileranordnung mit digital einstellbarem Teilungsfaktor
aufweist, an der eine Referenzspannung anliegt, wobei das
Ausgangsignal der Spannungsteileranordnung einer Subtraktionseinrichtung zugeführt wird, der auch die Meßspannung
oder eine von dieser abgeleitete Spannung zugeführt wird.

Bei bekannten derartigen Waagen ist man bestrebt, das Gewicht des Lastträgers, das beispielsweise bei einer Fahrzeugwaage viele Tonnen betragen kann, größtenteils zu kompensieren, damit der Arbeitsbereich einer die Meßspannung in
eine Anzeige umsetzenden Einrichtung möglichst weitgehend
ausgenutzt werden kann. Es kann sich hierbei insbesondere um
den Arbeitsbereich eines Analog-Digital-Umsetzers zur Erzeugung einer Digitalanzeige in Verbindung mit analogen Verstärkern handeln. Insbesondere bei Fahrzeugwaagen zum Wägen
von Lastkraftwagen oder Eisenbahnwaggons kann es vorkommen,
daß eine Wägezelle, häufig auch als Meßdose bezeichnet, die
beispielsweise mit einer Last von maximal 40 t belastet
werden kann, durch den Lastträger bereits mit einer Vorlast
von beispielsweise 10 t beaufschlagt wird. Dieser von der
Vorlast herrührende Anteil der Meßspannung muß aus den oben
genannten Gründen zum größten Teil kompensiert werden. Die
Wägezelle kann als Metallzylinder ausgebildet sein, der
durch die Belastung gestaucht wird, und auf den Metallzylinder sind vier Dehnmeßstreifen in geeigneter Anordnung aufgebracht, die nach Art einer Wheatstone-Brücke geschaltet ist,
wobei einer Diagonale der Brücke eine feste Wägezellenspannung zugeführt wird, und die Meßspannung an der anderen
Diagonale der Brücke abgegriffen wird. Es sind aber auch
andere Wägezellen bei derartigen Waagen verwendbar.

Bei bekannten Waagen wurde bisher eine Kompensation desjenigen Anteils der Meßspannung, der auf die Vorlast zurückgeht, dadurch vorgenommen, daß eine Anzahl hochgenauer Widerstände und eine entsprechende Anzahl von Hand zu betätigender Schalter vorgesehen wurde, durch die wahlweise Widerstände einschaltbar waren, um durch Auswahl der passenden Widerstände die gewünschte Kompensationsspannung zu erzeugen. Der Nachteil dieser bekannten Einrichtung besteht darin, daß durch die Übergangswiderstände der Schalter nicht eindeutig bestimmbare Verfälschungen des Meßergebnisses auftreten. Es ist zwar bereits bekannt, den Abgleich dadurch vorzunehmen, daß hochgenaue Widerstände bei der Erstellung der Waage in eine Spannungsteileranordnung eingelötet werden, um dadurch die gewünschte Kompensationsspannung zu erzeugen. Ein derartiger Abgleichvorgang von Hand ist jedoch sehr mühsam.

Der Erfindung liegt die Aufgabe zugrunde, eine Waage der eingangs geschilderten Art zu schaffen, bei der auf einfache Weise ein definierter Abgleich möglich ist, der also keine undefinierbaren Verfälschungen des Meßergebnisses bewirkt. Diese Aufgabe wird gemäß der Erfindung dadurch gelöst, daß die Spannungsteileranordnung einen durch digitale elektrische Signale steuerbaren integrierten multiplizierenden Digital-Analog-Wandler aufweist.

Der Vorteil liegt darin, daß ein definierter Abgleich unter Verwendung handelsüblicher elektrisch schaltbarer Digital-Analog-Wandler möglich ist, wobei dadurch, daß die Einstellung des Wandlerfaktors durch elektrische digitale Signale möglich ist, einerseits geringe Schwankungen dieser elektrischen Signale den Wandlungsfaktor nicht beeinflußen, so
daß zum Einstellen des Wandlers beispielsweise auch die oben
erwähnten Schalter verwendet werden können, und andererseits
auch die Möglichkeit eröffnet ist, die Einstellung des Wandlerfaktors automatisch vornehmen zu lassen, insbesondere
mittels eines Mikroprozessors. Unter dem Ausdruck multiplizierender Digital-Analog-Wandler wird ein derartiger
Wandler verstanden, dem als analoge Eingangsgröße nicht nur
eine einzige fest vorgegebene Spannung zugeführt werden
kann, sondern diese Spannung variieren kann und diese Spannungsänderungen auch im Ausgangssignal des Wandlers erscheinen.

Die Erfindung bezieht sich nicht nur auf die komplette
elektromechanische Waage, sondern auch auf die Einrichtung
zur Auswertung der Meßspannung allein.

Bei einer Ausführungsform der Erfindung weist die Spannungsteileranordnung einen Operationsverstärker mit einem invertierenden und einem nicht invertierenden Eingang auf,
dessen nicht invertierender Eingang an einem festen Bezugspotential, insbesondere Masse, liegt, dessen invertierender Eingang einerseits über einen Widerstand mit dem Ausgang
des Operationsverstärkers verbunden ist und andererseits
über eine Mehrzahl von parallel zueinander angeordneten
steuerbaren Halbleiterschaltern, mit denen jeweils ein
Widerstand in Serie liegt, mit Abgriffen eines Spannungsteilers verbindbar ist, dessen einem Anschluß die Referenzspannung zugeführt wird, und dessen anderer Anschluß auf dem
Bezugspotential liegt. Der Vorteil dieser Ausführungsform, bei der der Operationsverstärker mit dem in der geschilderten Weise schaltbaren Spannungsteiler nach Art eines Additionsverstärkers zusammenwirkt, liegt darin, daß eine hohe Genauigkeit der durch Ansteuerung der Halbleiterschalter erzielbaren Teilungsgrade erzielt werden kann, wobei endliche Durchlaßwiderstände der Halbleiterschalter oder von einem Sollwert geringfügig abweichende Steuerspannungen zur Betätigung der Halbleiterschalter keinen nennenswerten Einfluß auf die Genauigkeit der eingestellten Verstärkung haben.

Bei einer Ausführungsform der Erfindung weist die Subtraktionseinrichtung einen Kondensator auf, der über steuerbare Schalter in der einen Schaltstellung mit der Meßspannung verbunden ist, und der in der anderen Schaltstellung mit seinem einen Anschluß mit dem Ausgang der Spannungsteileranordnung und mit seinem anderen Anschluß mit einem Eingang einer Verstärkereinrichtung verbunden ist, die Bestandteil der Einrichtung zur Auswertung der Meßspannung ist. Der Vorteil bei dieser Ausführungsform liegt darin, daß zum Ausführen der Subtraktion der Kompensationsspannung von der Meßspannung bzw. von der von dieser abgeleiteten Spannung kein Differenzverstärker erforderlich ist, sondern daß diese Subtraktion durch Potentialänderung des einen Anschlusses des genannten Kondensators vorgenommen wird. Die Tatsache, daß nicht ein zwei Eingangssignale verarbeitender Differenzverstärker erforderlich ist, macht es auch einfach, zur Weiterverarbeitung des Differenzsignals eine in der Verstärkung einstellbare Verstärkereinrichtung zu schaffen. Gemäß einer Ausführungsform der Erfindung ist der Subtrak-

tionseinrichtung eine Verstärkereinrichtung mit digital einstellbarer Verstärkung nachgeschaltet. Dadurch läßt sich der Umsetzbereich eines nachgeschalteten Analog-Digital-Umsetzers optimal ausnützen. Gemäß einer Ausführungsform der Erfindung weist die Verstärkereinrichtung einen Operations-verstärker mit einem invertierenden und einem nicht invertierenden Eingang auf, dessen nicht invertierender Eingang an einem festen Bezugspotential, insbesondere Masse liegt, dessen invertierender Eingang einerseits über einen Widerstand mit dem Eingang der Verstärkeranordnung verbunden ist, und anderseits über eine Mehrzahl von parallel zueinander angeordneten steuerbaren Halbleiterschaltern, mit denen jeweils ein Widerstand in Serie liegt, mit Abgriffen eines Spannungsteilers verbindbar ist, dessen einer Anschluß mit dem Ausgang des Operationsverstärkers verbunden ist, der gleichzeitig den Ausgang der Verstärkereinrichtung bildet, und dessen anderer Anschluß auf dem Bezugspotential liegt. Hier ist die Verstärkung dadurch veränderbar, daß die Gegenkopplung des Operationsverstärkers durch Betätigen der Halbleiterschalter geändert wird. Hier liegt der gleiche Vorteil vor, der oben bereits im Hinblick auf die Genauigkeit der einstellbaren Teilung besprochen wurde.

Vorteilhaft können die oben besprochenen Spannungsteiler und Halbleiterschalter und weitere diesen zugeordnete Bauelemente Bestandteile eines handelsüblichen, als einheitliches Bauteil ausgebildeten Digital-Analog-Umsetzers sein, wobei sich insbesondere der Typ DAC 1020 der Firma National Semiconductor als sehr gut geeignet herausgestellt hat.

Die Verwendung einer in der geschilderten Weise hinsichtlich
ihrer Verstärkung einstellbaren Verstärkereinrichtung
bringt den Vorteil, daß das im Betrieb maximal mögliche
Ausgangssignal dieser Verstärkereinrichtung weitgehend dem
von der nachfolgenden Schaltung verarbeitbaren maximalen
Spannungsbereich auf einfache Weise angepaßt werden kann.

Die Referenzspannung, aus der die Kompensationsspannung
erzeugt wird, ist bei einer Ausführungsform der Erfindung,
bei der eine Spannungsquelle zur Versorgung der Wägezelle
mit einer Wägezellenspannung vorgesehen ist, aus der Wägezellenspannung abgeleitet. Der Vorteil liegt dabei darin,
daß Schwankungen der Wägezellenspannung sich nicht auf die
Genauigkeit der Differenzbildung auswirken können. Bei
Ausführungsformen der Erfindung, bei der das Ausgangssignal
der weiteren Verstärkeranordnung einem Analog-Digital-Umsetzer zugeführt wird, kann vorteilhaft die aus der Wägezellenspannung abgeleitete Referenzspannung dem Analog-Digital-Umsetzer zugeführt werden; hierdurch werden Schwankungen
der Meßspannung, die auf Schwankungen der Wägezellenspannung
beruhen, kompensiert.

Größere elektromechanische Waagen benötigen im allgemeinen
mehr als eine einzige Wägezelle, beispielsweise vier Wägezellen. Es besteht dann die Möglichkeit, die Wägezellen
exakt gleich auszubilden (was sehr aufwendig ist) und
parallel zu schalten und sie mit der beschriebenen Auswerteschaltung zu verbinden. Oder aber es besteht die Möglichkeit, jeder dieser Wägezellen eine Auswerteschaltung der
oben beschriebenen Art nachzuschalten und die von den einzelnen Auswerteschaltungen gelieferten Endergebnisse zu
addieren.

Der Aufwand wird jedoch erheblich verringert, wenn gemäß
einer Ausführungsform der Erfindung bei einer Waage mit
einer Mehrzahl von Wägezellen eine Steuervorrichtung, insbesondere ein Mikroprozessor vorgesehen wird, der der Reihe
nach die Meßspannungen der einzelnen Wägezellen an die
Einrichtung zur Auswertung der Meßspannung anschaltet, wobei
die Steuervorrichtung bei jedem Anschalten einer Meßspannung
den Steuereingängen der Spannungsteileranordnung der jeweiligen Wägezelle zugeordnete Steuersignale zwecks Erzeugung einer der jeweiligen Wägezelle zugeordneten Kompensationsspannung zuführt, und daß die Steuervorrichtung die
Addition der für die einzelnen Wägezellen gelieferten Wägeergebnisse zu einem Gesamtergebnis veranlaßt. Diese Addition
kann vom gleichen Mikroprozessor vorgenommen werden. Ein
weiterer Vorteil dieser Ausführungsform liegt darin, daß in
einem Speicher abgespeicherte Steuersignale für die Einstellung des Teilungsfaktors der Spannungsteileranordnung
von der Steuervorrichtung abgerufen werden können, so daß
das Meßsignal jeder einzelnen Wägezelle in einem Maß, das
für diese spezielle Wägezelle optimal ist, hinsichtlich der
Vorbelastung durch den Lastträger kompensiert werden kann.
Dadurch wird es auch ermöglicht, Wägezellen mit unterschiedlichen Charakteristiken an unterschiedlichen Stellen der
Waage zu verwenden. Auch kann eine einzige Auswerteschalung
wahlweise an eine oder gleichzeitig auch an mehr als eine
Waagenmechanik (Lastträger mit Wägezellen) angeschaltet
werden, insbesondere auch bei einer Lastzugwaage zum nahezu gleichzeitigen, getrennten Wägen des Lastkraftwagens und des
Anhängers eines Lastzugs.

Bei einer Weiterbildung der soeben beschriebenen Ausführungsform ist vorgesehen, daß die Steuervorrichtung beim
Anlegen jeder der Meßspannungen, die von den einzelnen
Wägezellen herrühren, auch den Steuereingängen der Verstärkereinrichtung der jeweiligen Wägezelle zugeordnete
Steuersignale, die ebenfalls in einem Speicher abgelegt
sein können, zur Einstellung der Verstärkung der Verstärkereinrichtung zuführt.

Auf diese Weise wird mit einem verhältnismäßig geringen
Aufwand für jede Wägezelle eine optimale Auswertung des
Meßsignals ermöglicht.

Weitere Merkmale und Vorteile der Erfindung ergeben sich aus
der nachfolgenden Beschreibung von Ausführungsbeispielen der
Erfindung anhand der Zeichnung, die erfindungswesentliche
Einzelheiten zeigt, und aus den Ansprüchen. Die einzelnen
Merkmale können je einzeln für sich oder zu mehreren in
beliebiger Kombination bei einer Ausführungsform der Erfindung verwirklicht sein. Es zeigen

Fig. 1     ein vereinfachtes Schaltbild eines Ausführungsbeispiels einer Waage,

Fig. 2     ein vereinfachtes Schaltbild einer Steuervorrichtung für eine Waage nach Fig. 1,

Fig. 3　　ein vereinfachtes Schaltbild eines Bauelements
　　　　　　DAC 1020,

Fig. 4　　die Realisierung eines Umschalters durch eine
　　　　　　integrierte Schaltung DG 303,

Fig. 5　　eine graphische Darstellung zur Erläuterung der
　　　　　　Funktionsweise des in Fig. 1 dargestellten Analog-
　　　　　　Digitalumsetzers.

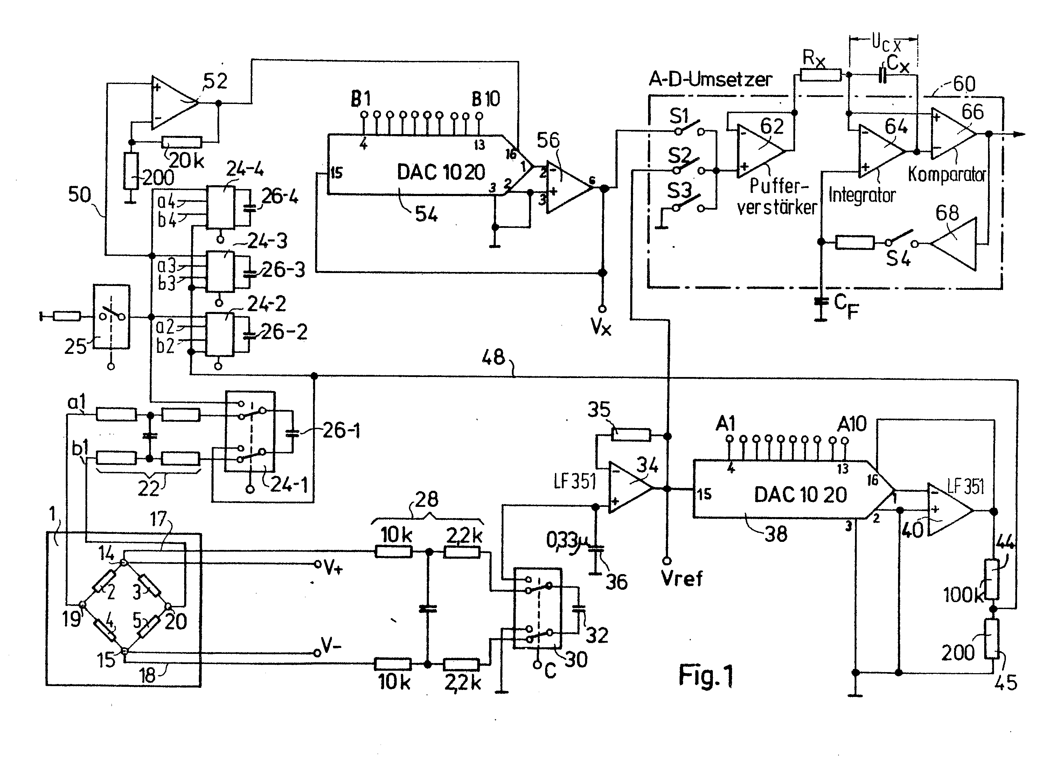

Die Schaltungsanordnung nach Fig. 1 ist für eine Waage mit
vier Wägezellen vorgesehen, wobei die Funktionsweise zunächst unter der Annahme erklärt wird, daß die Waage nur
eine einzige Wägezelle aufweist.

Eine Wägezelle 1, von der in Fig. 1 nur die elektrischen
Teile, nämlich vier als Wheatstone-Brücke geschaltete Dehnungsmeßstreifen 2, 3, 4, 5 mit den elektrischen Zuleitungen
gezeigt sind, wird an ihrer einen Diagonale 14, 15 mit einer
Gleichspannung versorgt. An die anderen Diagonalpunkte 19
und 20 der Wägezelle 1 sind Meßleitungen a1 und b1 angeschlossen, deren Ausgangssignal über einen durch Widerstände
und einen Kondensator gebilderen Tiefpaß 22 Anschlußklemmen
eines zweipoligen Umschalters 24-1 zugeführt werden. In der
gezeigten Schaltstellung des Umschalters 24-1 gelangen die
an den Meßleitungen a1 und b1 anliegenden Meßspannungen
dabei an die beiden Anschlüsse eines Kondensators 26-1 und
laden diesen auf die Differenzspannung, die zwischen den
beiden Leitungen a1 und b1 herrscht, auf.

Die den Punkten 14 und 15 zugeführte Gleichspannung gelangt über einen Tiefpaß 28 zu Anschlußklemmen eines zweipoligen Umschalters 30 und lädt in der gezeigten Schaltstellung einen Kondensator 32 auf die zwischen den Diagonalpunkten 14 und 15 der Wägezelle 1 wirksame Spannung auf. Der Umschalter 30 wechselt seine Schaltstellung ständig. Wenn der Umschalter 30 seine andere, in Fig. 1 nicht dargestellte Schaltstellung einnimmt, ist der eine Anschluß des Kondensators 32 mit Masse verbunden, und der andere Anschluß ist mit dem nicht invertierenden Eingang eines Operationsverstärkers 34 verbunden, in dessen vom Ausgang zum invertierenden Eingang verlaufenden Gegenkopplungszweig ein Widerstand 35 liegt. Zwischen den nicht invertierenden Eingang des Operationsverstärkers 34 und Masse ist ein Kondensator 36 eingeschaltet.

Der Eingangswiderstand jedes Operationsverstärkers ist relativ hoch, insbesondere ist im Ausführungsbeispiel der Eingangswiderstand des nicht invertierenden Eingangs des Operationsverstärkers 34 sehr viel höher als der Innenwiderstand derjenigen Schaltung, die den Kondensator 32 auf die an den Punkten 14 und 15 wirksame Spannung auflädt. Die Spannung am Kondensator 36 folgt nach wenigen Schaltspielen des Umschalters 30 etwaigen geringfügigen Schwankungen der Spannung an den Diagonalenpunkten 14, 15 innerhalb einer im vorliegenden Fall vernachlässigbaren zeitlichen Verzögerung. Der durch eine integrierte Schaltung LF 351 gebildete, als Impedanzwandler geschaltete Operationsverstärker 34 mit einem Verstärkungsfaktor von 1 liefert an seinem Ausgang eine der Speisespannung der Wägezelle 1 proportionale Referenzspannung Vref, die dem Anschluß 15 eines handelsüblichen, einen durch elektrische Signale einstellbaren Spannungsteiler enthaltenden Bauelements DAC 1020, das das
Bezugszeichen 38 trägt, zugeführt wird. Dieses Bauelement 38
wird nachfolgend vereinfachend als Digital-Analog-Umsetzer
bezeichnet, da es in Abhängigkeit von einer digitalen Ansteuerung eine analoge Größe, nämlich den Widerstandswert
des in ihm enthaltenen schaltbaren Spannungsteiler zu ändern
gestattet. An Steuereingänge 4 bis 13 des Digital-Analog-Umsetzers 38 können digitale Steuersignale angelegt werden.
Der Anschluß 1 des Digital-Analog-Umsetzers 38 ist mit dem
invertierenden Eingang und der Anschluß 2 mit dem nicht
invertierenden Eingang eines Operationsverstärkers 40 verbunden. Die Anschlüsse 2 und 3 des Bauelements 38 liegen
gemeinsam an Masse. Der Ausgang des Operationsverstärkers 40
ist mit dem Anschluß 16 des Bauelements 38 verbunden.
Zwischen dem Ausgang des Operationsverstärkers 40 und Masse
ist ein Spannungsteiler, bestehend aus Widerständen 44 und
45, eingeschaltet, und von einem Abgriff dieses Spannungsteilers wird ein kleiner Bruchteil der am Ausgang des
Operationsverstärkers 40 herrschenden Spannung über eine
Leitung 48 einem Anschluß des Umschalters 24-1 zugeführt.

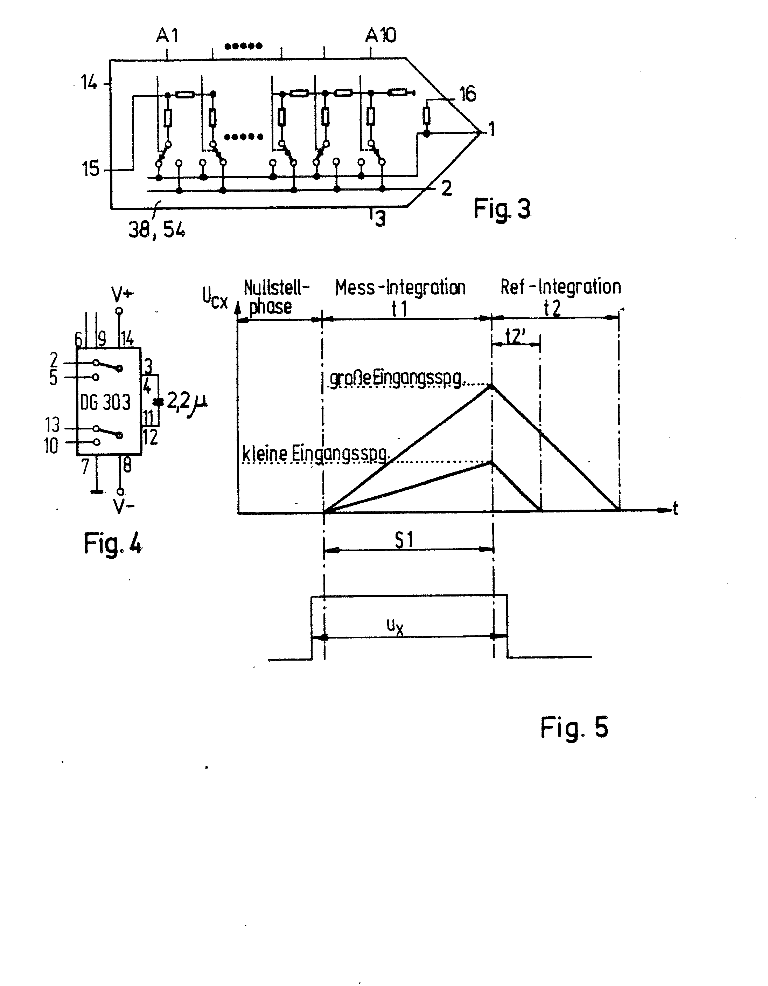

Wie anhand des vereinfachten Schaltbilds der Fig. 3, das
auch den Datenblättern der Hersteller entnommen werden kann, leicht erkannt werden kann, bildet das Bauelement 38 zusammen mit dem Operationsverstärker 40 eine Spannungsteileranordnung für die zugeführte Referenzspannung Vref mit einem Teilungsfaktor, ·der durch Zuführen von Steuersignalen zu den Anschlüssen 4 bis 13 einstellbar ist.

Der Teilungsfaktor der durch die Bauelemente 38 und 40 gebildeten Spannungsteileranordnung ergibt sich in Abhängigkeit von den den Steuereingängen 4 bis 13 zugeführten Steuersignalen A1 bis A10 wie folgt:

$$V = - \frac{A1 + 2 \times A2 + 4 \times A3 + \ldots 512 \times A10}{1024},$$

wobei An = 0 oder 1 ist.

Wie bereits erwähnt, wird der Kondensator 26-1 in der in Fig. 1 gezeigten Schaltstellung des Umschalters 24-1 auf die zwischen den Leitungen a1 und b1 herrschende Differenzspanung aufgeladen. Wird der Umschalter 24-1 umgeschaltet, so ist der in Fig. 1 untere Anschluß des Kondensators 26-1 mit der Leitung 48 verbunden, und der obere Anschluß des Kondensators 26-1 ist mit einer Leitung 50 verbunden, die zum nicht invertierenden Eingang eines Operationsverstärkers 52 führt, der in der ersichtlichen Weise so geschaltet ist, daß er eine Verstärkung V ≈ 100 aufweist. Der Ausgang des Operationsverstärkers 52 ist mit dem Anschluß 16 eines Bauelements 54 verbunden, das mit dem Bauelement 38 übereinstimmt
und im Ausführungsbeispiel durch ein Bauelement DAC 1020
gebildet ist.

Der Anschluß 1 des Bauelements 54 ist mit dem invertierenden
Eingang eines Operationsverstärkers 56 verbunden, die Anschlüsse 2 und 3 liegen, wie auch der nicht invertierende
Eingang des Operationsverstärkers 56 an Masse. Der Ausgang
des Operationsverstärkers 56 ist mit dem Anschluß 15 des
Bauelements 54 verbunden und bildet gleichzeitig den Ausgang
der durch das Bauelement 54 und den Operationsverstärker 56
gebildeten Verstärkereinrichtung. Wie ein Vergleich mit Fig.
3 leicht zeigt, ist bei dieser Verstärkereinrichtung 54, 56
der insgesamt negative Verstärkungsfaktor dadurch veränderbar, daß der im Gegenkopplungszweig des Operationsverstärkers 56 wirksame Widerstandswert veränderbar ist.

Der Verstärkungsfaktor der Anordnung 54, 56 ergibt sich zu

$$V = \frac{-1024}{512 \times B1 + 256 \times B2 + 128 \times B3 + \dots + 2 \times B9 + B10}$$

wobei $Bn = 0$ oder $1$ ist.

Alle in Fig. 1 gezeigten Operationsverstärker bis auf die im
A-D-Umsetzer 60 sind durch integrierte Schaltungen LF 351
gebildet.

0103152

Das Ausgangssignal Vx des Operationsverstärkers 56 hat die
Form von Rechteckimpulsen (siehe Fig. 5) entsprechend der
Umschaltung der Schalter 24 und wird einem Eingang eines
Analog-Digital-Umsetzers 60 zugeführt; einem weiteren Eingang wird die vom Ausgang des Operationsverstärkers 34
gelieferte Referenzspannung Vref zugeführt. Der Analog-
Digital-Umsetzer 60 ist an sich bekannt. Er weist einen als
Pufferverstärker dienenden Operationsverstärker 62, einen
als Integrator arbeitenden Operationsverstärker 64 und einen
als Komparator arbeitenden Operationsverstärker 66 und einem
weiteren Verstärker 68 auf. Wegen weiterer Einzelheiten der
Schaltung wird auf Fig. 1 verwiesen. Die Arbeitsweise des
Analog-Digital-Umsetzers ist wie folgt:

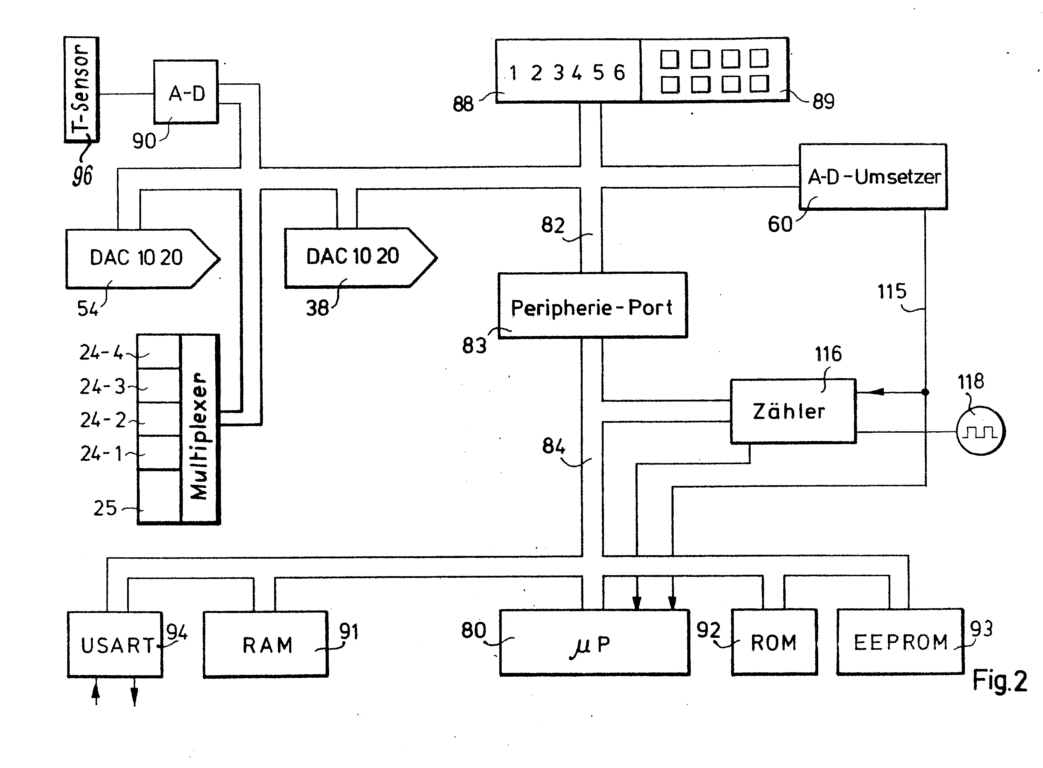

Zunächst werden die Schalter S1 und S4 innerhalb der Zeitspanne, in der der Eingang des Verstärkers 52 nicht mit dem
Kondensator 26, sondern durch einen Schalter 25 mit Masse
verbunden ist, geschlossen, um Fehlerspannungen im Kondensator CF zu speichern. Anschließend wird der Schalter S4
geöffnet und es bleibt der Schalter S1 für eine genau festliegende konstante Zeit t1 während des Anstehens des Meßspannungsimpulses Vx am Ausgang des Verstärkers 56, also
während der Anschaltung des Kondensators 26 an den Verstärker 52, geschlossen, vgl. hierzu auch Fig. 5. Während dieser
Zeit lädt sich der Integrationskondensator Cx auf eine
Spannung auf, die der auf der Leitung 50 herrschenden Spannung proportional ist. Nach Ablauf der Zeitspanne t1 wird
der Schalter S1 geöffnet, und es wird der Schalter S2 geschlossen. Da die Referenzspannung Vref die entgegengesetztes Polarität hat wie die Ausgangspannung des Operationsverstärkers 56, wird während der Zeit, während der der Schalter
S2 geschlossen ist, der Integratonskondensator Cx entladen.
In dem Augenblick, in dem die Spannung am Integrationskondensator Cx den Wert 0 erreicht und die Aufladung des Integrationskondensators Cx mit umgekehrter Polarität beginnt,
wechselt die Aussgangsspannung des als Komparator arbeitenden Operationsverstärkers 66 ihre Polarität, und dieser
Polaritätswechsel wird von der in Fig. 2 dargestellten
Steuervorrichtung erfaßt. Je höher die Ausgangsspannung des
Operationsverstärkers 56 im Vergleich zur Referenzspannung
Vref ist, umso länger muß der Schalter S2 im Vergleich zur
Schließungsdauer des Schalters S1 geschlossen bleiben, damit
der Integrationskondensator Cx vollständig entladen wird.
Bei konstanter Schließungsdauer des Schalters S1 ist die
Zeitspanne zwischen dem Schließen des Schalters S2 und dem
Auftreten des Polaritätswechsels am Ausgang des Operationsverstärkers 66 ein Maß für die Höhe der Spannung am Ausgang
des Operationsverstärkers 56. Diese Zeitspanne wird durch
die noch zu beschreibende Steuervorrichtung durch Zählen
gemessen und liefert unmittelbar eine für die Höhe der
Spannung am Ausgang des Operationsverstärkers 56 charakteristische digitale Größe.

Die am nicht invertierenden Eingang des Operationsverstärkers 34 anliegende Spannung ist im Ausführungsbeispiel stets
positiv gegenüber Masse, daher ist die auf der Leitung 48
anstehende Spannung stets negativ. Die Anordnung bei der
Wägezelle 1 ist so getroffen, daß die bei Belastung der
Wägezelle auf der Leitung a1 auftretende Spannung gegenüber
der auf der Leitung b1 auftretenden Meßleitung positiv ist.

Dies hat zur Folge, daß dann, wenn der Umschalter 24-1 aus
der in Fig. 1 gezeigten Stellung umgeschaltet wird, auf der
Leitung 50 eine Spannung auftritt, die gleich ist der Differenzspannung zwischen den Meßleitungen al und bl, vermindert
um den Betrag der auf der Leitung 48 anstehenden Spannung.
Mit Hilfe des Kondensators 26-1 wird somit eine Subtraktion
durchgeführt.

Der Teilungsfaktor der Spannungsteilervorrichtung 38, 40
wird durch passende Wahl der Steuersignale A1 bis A10 so
eingestellt, daß das Gewicht des Lastträgers, das auch ohne
Vorhandensein einer zu wägenden Last die Wägezelle 1 beaufschlagt und daher das Entstehen einer Differenzspannung
auf den Meßleitungen A1 und B1 verursacht, nahezu vollständig durch die beschriebene Differenzbildung mittels des
Kondensators 26-1 kompensiert wird. Eine vollständige Kompensation ist wegen der im Vergleich zum A-D-Umsetzer 60
geringeren Auflösung (im Beispiel 16 Bit gegenüber 10 Bit)
im allgemeinen nicht möglich.

Der Verstärkungsfaktor der weiteren Verstärkervorrichtung
54, 56 wird so eingestellt, daß bei der größten an der Wägezelle 1 auftretenden mechanischen Last, die noch meßtechnisch erfaßt werden soll, der Wandlungsbereich des Analog-
Digital-Umsetzers 60 nach oben hin nahezu vollständig ausgenützt wird, so daß die dem Analog-Digital-Umsetzer 60
innewohnende Genauigkeit möglichst weitgehend ausgenützt
wird.

0103152

Die Größe der Spannung Vx, die dem Schalter S1 zugeführt
wird, ergibt sich aus der Formel

$$Vx = Vref \frac{t2}{t1} \ .$$

Wenn, wie beim Ausführungsbeispiel vorgesehen, die Zeit t1,
während der der Schalter S1 geschlossen ist, durch das
gleiche Zeitnormal festgelegt wird, durch das auch die
Zeitdauer t2 gemessen wird, so beeinflussen geringfügige
langsame Schwankungen der Taktfrequenz, mit der diese genannten Zeiten gemessen werden, die Genauigkeit der Analog-
Digital-Umsetzung nicht. Da außerdem die von der Gleichspannungsversorgung der Wägezelle 1 abgeleitete Referenzspannung
Vref dem Analog-Digital-Umsetzer zugeführt wird, werden
Schwankungen der auf den Leitungen a1 und b1 auftretenden
Meßspannung, die auf Schwankungen der Versorgungsspannung
für die Wägezelle 1 beruhen, automatisch kompensiert.

Wenn eine Waage nicht nur eine einzige Wägezelle aufweist,
wie dies bei der obigen Beschreibung bisher angenommen
wurde, sondern mehrere Wägezellen, beispielsweise vier
Wägezellen, so kann die in Fig. 1 gezeigte Anordnung beispielsweise vierfach vorgesehen sein. Die von den einzelnen
Analog-Digital-Umsetzern gelieferten Wägeergebnisse müssen
dann noch zu einem Endergebnis addiert werden.

Bei der nun beschriebenen Ausführungsform ist jedoch auch
bei einer Waage mit mehreren Wägezellen die in Fig. 1 gezeigte Anordnung nur einmal vorhanden und weist gegenüber
der bisherigen Erläuterung der Fig. 1 noch folgende Ergänzungen auf: Die Waage weist drei weitere Wägezellen auf, die
prinzipiell so ausgebildet sind wie die Wägezelle 1, und
deren Diagonalenpunkte 14, 15 der Diagonale 14, 15 der
Wägezelle 1 parallel geschaltet sind. Die Meßleitungen
dieser drei weiteren Wägezellen sind mit a2, b2, a3, b3 und
a4, b4 bezeichnet und führen über nicht dargestellte, dem
Tiefpaß 22 entsprechende Tiefpässe zu Umschaltern 24-2, 24-3
und 24-4, die in ihrem Aufbau dem Umschalter 24-1 entsprechen. An die Umschalter ist wieder ein dem Kondensator
26-1 entsprechender Kondensator 26-2, 26-3 bzw. 26-4 angeschlossen. Die Leitung 48 ist parallel zum Umschalter 24-1
auch mit jeweils einem Kontakt der Umschalter 24-2 bis 24-4
verbunden. Die Leitung 50 ist parallel zum Umschalter 24-1
ebenfalls mit jeweils einem Kontakt der Umschalter 24-2 bis
24-4 verbunden. Im Ruhezustand haben alle Umschalter 24 die
in Fig. 1 beim Schalter 24-1 gezeigte Schaltstellung. Zur
gleichen Zeit wird jeweils nur einer der Umschalter 24 in
seine andere Schaltstellung umgeschaltet und bewirkt dann
die Zuführung einer Spannung zur Leitung 50, die sich aus
der auf den Meßleitungen a1, b1; a2, b2, a3, b3 bzw. a4, b4
herrschenden Differenzspannung, vermindert um die auf der
Leitung 48 herrschende Spannung, ergibt. Der Schalter 25 ist
immer geschlossen, wenn keiner der Kondensatoren 26-1 bis
26-4 mit dem Verstärker 52 verbunden ist.


Die Umschalter 24-1 bis 24-4 werden zyklisch nacheinander
betätigt, so daß der Analog-Digital-Umsetzer 60 zusammen mit
seiner Steuerschaltung nacheinander die Wägeergebnisse für die einzelnen Wägezellen liefert, und diese Wägeergebnisse müssen noch zu einem Endergebnis addiert werden.

Bei dem hier beschriebenen Ausführungsbeispiel der Erfindung ist vorgesehen, daß zusammen mit der Anschaltung der einzelnen Wägezellen durch Betätigen der Schalter 24-1 bis 24-4 auch der Teilungsfaktor der Spannungsteilervorrichtung 38, 40 und der Verstärkereinrichtung 54, 56 umgeschaltet werden kann. Dies wird nun anhand der Fig. 2 erläutert.

Die in Fig. 2 in einer Prinzipdarstellung gezeigte Steuereinrichtung weist einen Mikroprozessor 80 auf. Jeder der Digital-Analog-Umsetzer 38 und 54 ist mit einem Peripheriebus 82 verbunden, der über einen Peripherie-Port 83 und einen Bus 84 mit dem Mikroprozessor 80 verbunden ist. Mit dem Peripheriebus 82 sind auch eine Ziffernanzeige 88 und eine Tastatur 89 verbunden, außerdem die Steuerleitungen der Schalter 24-1 bis 24-4 und 25 und des A-D-Umsetzers 60 sowie ein Analog-Digital-Wandler 90, der zum Anschluß eines Temperaturfühlers 96 dient. Mit dem Mikroprozessor 80 steht ein Schreib-Lese-Speicher (RAM) 91, ein Lese-Speicher (ROM) 92, ein elektrisch löschbarer programmierbarer Lesespeicher 93 (EEPROM) und ein Universeller synchroner/asynchroner Empfänger/Sender (USART) 94 in Verbindung.

Der Ausgang des Verstärkers 66 des Analog-Digital-Umsetzers 60 ist über eine Leitung 115 mit einem Interrupt-Eingang des Mikroprozessors 80 und mit einem Steuereingang eines Zählers 116 verbunden, dem von einem Taktgenerator 118 ein Taktsignal zugeführt wird.

Bei der Herstellung und erstmaligen Einrichtung der mit vier
Wägezellen ausgerüsteten Waage werden die Steuersignale zur
Einstellung der Digital-Analog-Umsetzer 38 und 54 in Form
von Binärzahlen im EEPROM 93 abgespeichert. Da für jede der
vier Wägezellen die Digital-Analog-Umsetzer 38 und 54 auf
einen anderen Wert eingestellt werden können sollen, werden
somit insgesamt acht Binärzahlen, die Steuersignale für
diese Umsetzer repräsentieren, im Speicher 93 für einen
einzigen Wägebereich gespeichert, wobei zunächst angenommen
werden soll, daß die Waage nur einen einzigen Wägebereich
oder Gewichtsbereich aufweist. Der Mikroprozessor 80 ist so
programmiert, daß zunächst auf dem Bus 82 solche Signale
herrschen, daß alle Umschalter 24-1 bis 24-4 die in Fig. 1
dargestellte Stellung haben, so daß dem Operationsverstärker
52 kein Meßsignal zugeführt wird. Anschließend wird vom
Mikroprozessor 80 die Einstellung der in den Bauelementen 38
und 54 enthaltenen Spannungsteiler in der Weise veranlaßt,
wie dies bei der Einrichtung der Waage für die erste Wägezelle 1 vorgesehen wurde. Anschließend wird der Umschalter
24-1 betätigt und es werden somit die auf den Leitungen a1
und b1 liegenden Meßspannungen mit der auf der Leitung 48
liegenden Kompensationsspannung in der oben geschilderten
Weise verknüpft und dem Eingang des Operationsverstärkers 52
zugeführt. Der Mikroprozessor 80 veranlaßt dann durch die
oben geschilderte Betätigung der Schalter S 1 bis S 4 des
Analog-Digital-Umsetzers 60 die Ermittlung des der ersten
Wägezelle zugeordneten Wägeergebnisses und speichert dieses
ab. Anschließend wird der Umschalter 24-1 in seine in Fig. 1
gezeigte Lage zurückgeschaltet, es wird die zweite, in Fig.
1 nicht eigens dargestellte Wägezelle durch Betätigen des Umschalters 24-2 eingeschaltet, deren Wägeergebnis ermittelt und abgespeichert und so fort bis alle vier Wägeergebnisse vorhanden sind und zu einem Summenwert addiert werden. Dieser Summenwert wird in der Anzeige 88 angezeigt und gibt somit das Gewicht der auf dem Lastträger befindlichen Last, beispielsweise das Gewicht eines Fahrzeugs, an.

Da wegen der nur teilweisen Kompensation des Gewichts des Lastträgers auch bei Nichtvorhandensein einer Last vom Analog-Digital-Umsetzers 60 ein digitaler Wert ermittelt wird, wird dieser durch eine im Mikroprozessor 80 vorgenommene digitale Subtraktion unterdrückt. Im Mikroprozessor 80 wird außerdem durch eine digitale Multiplikation dafür gesorgt, daß trotz der nur in Stufen einstellbaren Verstärkung der Verstärkereinrichtung 54, 56 bei der Belastung der einzelnen Wägezellen mit einer der oberen Grenze des Meßbereichs, zum Beispiel 20 t, zugeordneten Belastung die Umsetzung durch den Analog-Digital-Umsetzer 60 einen genau festgelegten Zahlenwert ergibt. Dieser Zahlenwert kann beispielsweise 50 000 sein, wenn der Analog-Digital-Umsetzer 60 eine Auflösung von 50 000 Teilen hat. Dadurch wird die Addition der verschiedenen Wägeergebnisse der einzelnen Wägezellen und die weitere Verarbeitung erleichtert.

Die Erfindung ermöglicht es, bei der erstmaligen Inbetriebnahme der Waage oder auch später die Einstellung der Kompensation, die durch Einstellung des Teilungsfaktors der Spannungsteileranordnung 38, 40 erfolgt, automatisch vorzunehmen.

Wenn die Waage nur eine einzige Wägezelle aufweist, auf die
die Last mechanisch über Hebelwerke übertragen wird, läuft
der Abgleich unter Steuerung durch ein Programm des Mikroprozessors in folgender Weise ab: Der Installateur erhält
vom Programm die Aufforderung, die Plattform von jeder
Belastung freizumachen und quittiert dies durch Rücksendung
eines geeigneten Signals, beispielsweise über einen Knopfdruck. Das Programm stellt dann den Wandler 45 auf einen
mittleren Verstärkungsfaktor ein und variiert systematisch
den Teilungsfaktor des Wandlers 38 beim maximalen Teilungsfaktor beginnend, der einer Vorlast von Null entspricht. Der
Teilungsfaktor wird systematisch ständig verringert, was
einer systematischen Erhöhung der Vorlast entspricht, bis
das Ausgangssignal des Verstärkers 40, das vorher ständig
positiv war, einen negativen Wert annimmt. Dann wird vom
Programm der Wandler 38 in seinem Teilungsfaktor genau um
einen Binärschritt zurückgestellt, so daß das Ausgangssignal
des Verstärkers 40 wieder positiv wird. Der Teilungsfaktor
des Wandlers 38 und der Teilungsfaktor des Wandlers 54 sowie
das vom Analog-Digital-Umsetzer 60 gelieferte Ausgangssignal
für diesen Zustand werden abgespeichert, und zwar im EEPROM
93. Anschließend erhält der Installateur vom Programm die
Aufforderung, den Lastträger der Waage mit einer definierten
Last, insbesondere der Maximallast, zu beladen. Auch dieser
Beladungszustand wird quittiert. Dann ändert das Programm
systematisch den Verstärkungsgrad der Verstärkeranordnung
54, 56 durch Verstellen des Teilungsfaktors des Wandlers 54,
bis das Ausgangssignal des Analog-Digital-Umsetzers einem
vorbestimmten Wert, zum Beispiel einem Wert von 50.000
Teilen möglichst nahe kommt. Anschließend wird vom Mikroprozessor 80 der Quotient aus dem genauen Wert von 50.000 und dem tatsächlichen Ergebnis von etwa 50.000 gebildet, und dieser Quotient wird als Korrekturfaktor später mit allen Meßergebnissen der Waage multipliziert. Hierdurch entspricht die Nennlast der Waage stets dem hier genannten Betrag von 50.000 Teilen. Die 50.000 Teile ergeben sich, nachdem vorher das bei der Einstellung der Vorlast abgespeicherte Resterergebnis des Analog-Digital-Umsetzers 60 digital vom Meßergebnis der Nennlast subtrahiert worden ist.

Wenn die Waage mehrere Wägezellen (Meßdosen) aufweist, die in der geschilderten Weise nacheinander von der Meßvorrichtung abgefragt werden, so ist es nach dem jetzigen Kenntnisstand zweckmäßig, die Wägezellen einzeln auf der Prüfmaschine durchzumessen und ihre Kennwerte, ggf. auch die Temperaturabhängigkeit, aufzunehmen. Die Wägezellen werden nun in die Waage eingebaut und die aufgenommenen Werte werden in den Mikroprozessor 80 eingegeben und im EEPROM 93 gespeichert. Es wird nun jede einzelne Meßdose bei leerem Lastträger durch passende Einstellung des Teilungsfaktors des Wandlers 38 hinsichtlich der Vorlast weitgehend kompensiert, wie oben anhand der Waage mit einer einzigen Wägezelle beschrieben wurde. Die für jede einzelne Wägezelle sich ergebende nicht kompensierte Vorlast wird jeweils abgespeichert und diese Werte werden addiert und ergeben den Gesamtwert der nicht kompensierten Vorlast. Da die Kennlinien der einzelnen Wägezellen bekannt sind, kann für die maximale Belastung jeder Wägezelle bereits aus der Kenntnis der Kennlinie die Verstärkung der Verstärkereinrichtung 54, 56 eingestellt werden. Aufgrund der Kenntnis der Kennlinien

0103152

kann auch schon der Korrekturwert ermittelt werden, der·als Korrekturfaktor benötigt wird, um das gewünschte Endergebnis von zum Beispiel 50.000 Teilen bei Vollast genau zu erreichen. Es ist aber auch möglich, diesen Korrekturfaktor durch eine tatsächliche Beladung der Waage mit der Nennlast noch zu kontrollieren. Die Erfassung der Kennwerte auf der Prüfmaschine ist nach dem jetzigen Kenntnisstand deswegen erforderlich, weil dann, wenn die Wägezellen bereits in die Brücke eingebaut sind, nicht genau feststellbar ist, wie sich die Belastung der Brücke auf die einzelnen Wägezellen verteilt.

Vorzugsweise hat die Waage mehrere Meßbereiche, zum Beispiel 1 t, 10 t, 50 t. Dann sind vorzugweise für jeden Meßbereich gesonderte, zur Einstellung des Teilungsfaktors der Anordnung 38, 40 und des Verstärkungsfaktors der Verstärkereinrichtung 54, 56 dienende Werte im EEPROM 93 vorgesehen.

Im Ausführungsbeispiel werden die Wägezellen mit einer Gleichspannung gespeist; die Anordnung kann jedoch auch so abgeändert werden, daß eine Speisung mit Wechselspannung möglich ist.

Die Bezugszeichen in den Patentansprüchen sind keine Beschränkung, sondern sie sollen das Verständnis erleichtern.

Patentansprüche

1. Elektromechanische Waage mit einem Lastträger zur
Aufnahme der zu wägenden Last, mindestens einer Wägezelle, die in Abhängigkeit von der Last eine für die
Last charakteristische Meßspannung abgibt, mit einer
mindestens einen Operationsverstärker enthaltenden
Einrichtung zur Auswertung der Meßspannung mit einer
Einrichtung zum mindestens teilweisen Kompensieren des
Gewichts des unbelasteten Lastträgers, die eine Spannungsteileranordnung mit digital einstellbarem Teilungsfaktor aufweist, an deren Eingang eine Referenzspannung anliegt, wobei das Ausgangssignal der Spannungsteileranordnung einer Subtraktionseinrichtung
(24, 26) zugeführt wird, der auch die Meßspannung oder
eine von dieser abgeleitete Spannung zugeführt wird,
dadurch gekennzeichnet, daß die Spannungsteileranordnung (38, 40) einen durch digitale elektrische Signale
steuerbaren integrierten multiplizierenden Digital-
Analog-Wandler (38) aufweist.

2. Waage nach Anspruch 1, dadurch gekennzeichnet, daß die
Spannungsteileranordnung (38, 40) einen Operationsverstärker (40) mit einem invertierenden und einem
nichtinvertierenden Eingang aufweist, dessen nichtinvertierender Eingang an einem festen Bezugspotential
liegt, dessen invertierender Eingang einerseits über einen Widerstand mit dem Ausgang des Operationsverstärkers verbunden ist und andererseits über eine
Mehrzahl von parallel zueinander angeordneten steuerbaren Halbleiterschaltern, mit denen jeweils ein
Widerstand in Serie liegt mit Abgriffen eines Spannungsteilers verbindbar ist, dessen einem Anschluß die
Referenzspannung zugeführt wird, und dessen anderer
Anschluß auf dem Bezugspotential liegt.

3.    Waage nach einem der vorhergehenden Ansprüche, dadurch
      gekennzeichnet, daß die Subtraktionseinrichtung einen
      Kondensator (26) aufweist, der über steuerbare Schalter (24) in der einen Schaltstellung mit der Meßspannung verbunden ist, und der in der anderen Schaltstellung mit seinem einen Anschluß mit dem Ausgang der
      Spannungsteileranordnung (38, 40) und mit seinem
      anderen Anschluß mit einer Verstärkereinrichtung (52,
      54, 56) verbunden ist, die Bestandteil der Einrichtung
      zur Auswertung der Meßspannung ist.

4.    Waage nach einem der vorhergehenden Ansprüche, dadurch
      gekennzeichnet, daß der Subtraktionseinzug eine Verstärkereinrichtung (52, 54, 56) mit digital einstellbarer Verstärkung nachgeschaltet ist.

5.    Waage nach Anspruch 4, dadurch gekennzeichnet, daß die
      Verstärkereinrichtung einen Operationsverstärker (56)
      mit einem invertierenden und einem nicht invertierenden Eingang aufweist, dessen nicht invertierender Eingang an einem festen Bezugspotential liegt, dessen invertierender Eingang einerseits über einen Widerstand mit dem Eingang der Verstärkeranordnung verbunden ist, und andererseits über eine Mehrzahl von parallel zueinander angeordneten steuerbaren Halbleiterschaltern, mit denen jeweils ein Widerstand in Serie liegt, mit Abgriffen eines Spannungsteilers verbindbar ist, dessen einer Anschluß mit dem Ausgang des Operationsverstärkers verbunden ist, der gleichzeitig den Ausgang der Verstärkeranordnung bildet, und dessen anderer Anschluß auf dem Bezugspotential liegt.

6. Waage nach Anspruch 2 und/oder 5, dadurch gekennzeichnet, daß die Widerstände, der Spannungsteiler und die Halbleiterschalter Bestandteile eines handelsüblichen, als einheitliches Bauteil ausgebildeten Digital-Analog-Umsetzers (38, 54) sind, insbesondere vom Typ DAC 1020.

7. Waage nach Anspruch 3 oder 4, dadurch gekennzeichnet, daß das Ausgangssignal der Verstärkereinrichtung (54, 56) einem Eingang eines Analog-Digital-Umsetzers (60) zugeführt ist.

8. Waage nach einem der vorhergehenden Ansprüche, bei der eine Spannungsquelle zur Versorgung der Wägezelle (1) mit einer Wägezellenspannung vorgesehen ist, dadurch gekennzeichnet, daß die Referenzspannung aus der Wägezellenspannung abgeleitet ist.

9. Waage nach einem der vorhergehenden Ansprüche mit
einer Mehrzahl von Wägezellen, dadurch gekennzeichnet,
daß eine Steuervorrichtung (Mikroprozessor 80) vorgesehen ist, die der Reihe nach die Meßspannungen der
einzelnen Wägezellen an die Einrichtung zur Auswertung
der Meßspannung anschaltet, und die bei jedem Anschalten einer Meßspannung den Steuereingängen der Spannungsteileranordnung (38, 40) der jeweiligen Wägezelle
zugeordnete Steuersignale zwecks Erzeugung einer der
jeweiligen Wägezelle zugeordneten Kompensationsspannung zuführt, und daß die Steuervorrichtung die Addition der für die einzelnen Wägezellen gelieferten
Wägeergebnisse zu einem Gesamtergebnis veranlaßt.

10. Waage nach Anspruch 9, dadurch gekennzeichnet, daß die
Steuervorrichtung beim Anlegen jeder der Meßspannungen
auch den Steuereingängen der Verstärkereinrichtung
(54, 56) der jeweiligen Wägezelle zugeordnete
Steuersignale zur Einstellung der Verstärkung der
Verstärkervorrichtung zuführt.

11. Auswerteeinrichtung für die Auswertung der Meßspannung
einer elektromechanischen Waage, gekennzeichnet durch
ihre Ausbildung nach einem der vorhergehenden Ansprüche.

Fig. 1

Fig.2

Fig. 3

Fig. 4

Fig. 5